# EUROPEAN PATENT APPLICATION

(11) **EP 3 279 497 A1**
(43) Date of publication of application: **07.02.2018**
(21) Application number: 16182204.4
(22) Date of filing: 01.08.2016
(51) Int. Cl.: F16F 9/34, F16F 9/46

(54) **PATH SPLIT UNIT AND SAFETY VALVE FOR SUSPENSION DEVICE**

(71) Applicant: Kind Shock Hi-Tech Co., Ltd., Tainan City 709 (TW)
(72) Inventor: HSU, Jung Yu, TAINAN CITY 709 (TW)
(74) Representative: Cabinet Chaillot

(57) **Abstract**

A safety valve (70) includes a first part (21) and a second part (22). The first part (21) has a main chamber (23), and a sub chamber (24) is defined between the first and second parts (21, 22). A path split unit (30) includes a base (31) with a recess (32) which communicates with the sub chamber (24). The base (31) has a main path (33) communicating with the main chamber (23), and a sub-path unit (34) communicating with a sub chamber (24). One end of the sub-path unit (34) communicates with the main path (33). A safety path unit (40) communicates between the sub chamber (24) and the recess (32) and the sub-path unit (34) by a communication path (50). A switch unit (60) is received in the recess (32) and controls the communication between the main path (33) and the sub-path unit (34). When a severe and sudden impact is transferred to the suspension device (81, 91), a portion of liquid in the main path (33) flows into the sub chamber (24) to provide a level of buffering feature.

## Description

### BACKGROUND OF THE INVENTION

### 1. Fields of the invention

The present invention relates to a safety valve, and more particularly, to a safety valve using a path split unit for splitting the liquid paths in a suspension device such that when the suspension device is in locked status, the liquid is allowed to flow when a sudden and severe impact is transferred thereto.

### 2. Descriptions of Related Art

The conventional suspension device is used to buffer impact so as to protect the users or the mechanism itself. The suspension device used on traffic vehicles, such as cars, motorbikes or bicycles is especially important. The impact transferred from the road to the frame of the vehicles or even to the users has to be properly reduced or buffered.

The bicycle suspension device usually is installed to the front fork, the seat stays or the seat post to reduce the impact to the front wheel, the rear wheel and the seat.

The conventional suspension devices can be operated by mechanical, hydraulic or pneumatic-hydraulic way, wherein the mechanical suspension device uses a damper member which can be a spring to absorb the impact. The hydraulic suspension device has chambers and the fluid flows between chambers to create buffering feature. The pneumatic suspension device has liquid changer and air chamber, the air can be compressed to absorb the impact. Different operation modes can be combined.

The latest suspension device develops a lock-out feature which sets the suspension device to a certain level so that when the bicycle is ridden on a flat road, the suspension device is set to be locked to save the riders effort. The levels of suspension features can be adjusted according to practical needs. There is an adjustment device installed in the front fork suspension device, so that the user can set the status or the damping level of the suspension device to provide a proper response to the road.

The conventional adjustment device for a suspension device known to the applicant comprises an inner tube which has a first end inserted into an outer tube, wherein the first end has a piston with slots. A hollow tube which has one end fixed with the interior of the inner tube, and the other end of the hollow tube has holes of different sizes. The wall of the one end of the hollow tube that has larger diameter has a lower liquid holes communicating with the holes. An adjustment valve is located in the inner tube. A rod extends through the adjustment valve and is connected to the hollow tube. The rod has a passage. A control shaft is located in the hollow tube and has a top cone-shaped head and a bottom cone-shaped head. A flange extends from the mediate portion of the control shaft and is located in the hole that has larger diameter. The top cone-shaped head has a spring mounted thereto and the spring is located between the flange and the end face of the rod. An adjustment member is connected to the outer tube and located corresponding to the bottom cone-shaped head. The adjustment member has a button and an operation member connected to the button. The operation member has a cone-shaped push face which contacts the bottom cone-shaped head.

Another front fork suspension device includes an inner tube and an outer tube, a hollow piston is located in one end of the inner tube. An adjustment tube is located in the outer tube and the other end of the adjustment tube extends through the piston. The adjustment tube has a hollow tube and a control shaft. One end of the hollow tube that is located in the inner tube has a spring, a washer and an adjustment valve connected thereto. The adjustment valve has a lateral hole, and defines the inner tube to have a top chamber and a bottom chamber. A rod has liquid holes extends through the parts mentioned above and is fixed to the end of the hollow tube. The washer is located at the lateral hole. The hollow tube has a bottom hole in the bottom chamber and which communicates with the liquid hole. The other end of the hollow tube extends through the outer tube and is fixed to the outer tube. A control shaft is located in the hollow tube and has a cone-shaped head that is located corresponding to the bottom hole of the hollow tube. A gap is formed between the bottom hole and the cone-shaped head.

The two disclosures of the prior art mentioned above each have a knob located at the lower portion of the front fork, the knob of the first disclosure is operated to drive the control shaft to control the opening of the liquid hole to change the speed of the liquid to achieve the buffering purpose. The second disclosure operates the knob to control the control shaft to move linearly to adjust the size of the opening of the liquid hole. These two disclosures can only be functioned when the suspension devices are in action.

When the users ride on a flat rod and want to have a higher speed, and to save energy for treading the bicycle, the suspension device usually be set as locked status so that the force applied to the bicycle does not absorbed by the suspension device. When a sudden impact applies to the bicycle such as the bicycle moves over a hole or a rock on the road, the bicycle suddenly receives a severe impact which can easily damage the wheels or the frame. The user can even be injured and the parts of the bicycle can be deformed or shifted. Therefore, the safety factor is reduced. Therefore, the present invention intends to provide a safety valve to eliminate the shortcomings mentioned above.

### SUMMARY OF THE INVENTION

The present invention relates to a safety valve of a suspension device which has an inner tube and an outer tube which is movably mounted to the inner tube. The safety valve comprises a tube unit which is connected to the inner tube and has a first part and a second part which is mounted to the first part. The first part has a main chamber defined therein, and a sub chamber is defined between the first and second parts.

A path split unit has a base which has a recess defined in the top thereof. The recess communicates with the sub chamber. The base has a main path and a sub-path unit, wherein the main path communicates with the main chamber, and the sub-path unit communicates with the sub chamber. One end of the sub-path unit communicates with the main path.

A safety path unit has one end communicating the sub chamber, and the other end of the safety path unit communicates with the recess and the sub-path unit by a communication path.

A switch unit is received in the recess. When the switch unit is turned off, the suspension device is locked, and the communication between the main path and the sub-path unit is closed. When an impact that is higher than a pre-set value of the suspension device is transferred to the suspension device, a portion of liquid in the main path flows into the sub chamber via the communication path and the safety path unit to provide a level of buffering feature.

The present invention also relates to a path split unit of a suspension device, comprising a base, a recess defined in a top of the base for receiving a switch unit therein, a main path defined in the base and communicating with a main chamber, a sub-path unit located in the base and having a first sub path and a second sub-path, the first sub-path being in communication between the main path and a sub chamber, the second sub-path being in communication between the recess and the sub chamber, a safety path unit located in the base and having a safety path which communicates with the sub chamber, and a communication path located in the base and communicating with the first sub-path, the recess and the safety path.

The primary object of the present invention is to provide a safety valve and a path split unit for a suspension device, when an impact that is higher than a pre-set value of the suspension device is transferred to the suspension device, a portion of liquid in the main path flows into the sub chamber via the communication path and the safety path unit to provide a level of buffering feature.

Another object of the present invention is to provide a safety valve and a path split unit for a suspension device, wherein the base separates the two chambers and the safety path unit. The present invention can be used with two parallel chambers so as to define multiple paths.

Yet another object of the present invention is to provide a safety valve and a path split unit for a suspension device, when suspension device is locked, a safety path unit is provided such that when the impact is higher than a pre-set value, the safety path unit is activated to allow fluid to flow to reduce the potential risk of damaging the parts of the suspension device by the impact.

A further object of the present invention is to provide a safety valve and a path split unit for a suspension device, wherein the value of damping of the safety valve can be adjusted, only when the impact is higher than the pre-set value, the safety buffering feature is operated.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the base of the path split unit of the present invention;
Fig. 2 is a plane view of the base of the path split unit of the present invention;
Fig. 3 is a cross sectional view of the base, taken along line 3-3 of Fig. 2;
Fig. 4 is a cross sectional view of the base, taken along line 4-4 of Fig. 3;
Fig. 5 is a cross sectional view of the base, taken along line 5-5 of Fig. 4;
Fig. 6 is an exploded view of the suspension device of the present invention;
Fig. 7 is another exploded view of the suspension device of the present invention;
Fig. 8 is yet another exploded view of the suspension device of the present invention;
Fig. 9 is a top plane view of the present invention;
Fig. 10 is a cross sectional view of the base, taken along line 10-10 of Fig. 9;
Fig. 11 is a cross sectional view of the base, taken along line 11-11 of Fig. 10;
Fig. 12 is a cross sectional view of the base, taken along line 12-12 of Fig. 11;
Fig. 13 is a cross sectional view to show that the safety valve is operated when a sudden impact is transferred to the suspension device;
Fig. 14 is a cross sectional view of the base, taken along line 14-14 of Fig. 13;
Fig. 15 is a cross sectional view of the base, taken along line 15-15 of Fig. 14;
Fig. 16 shows the operation of the adjustment of the safety valve, and
Fig. 17 shows that the suspension device is used on a seat post.

### DETAILED DESCRIPTION OF THE PREFERRED EMBODIMENT

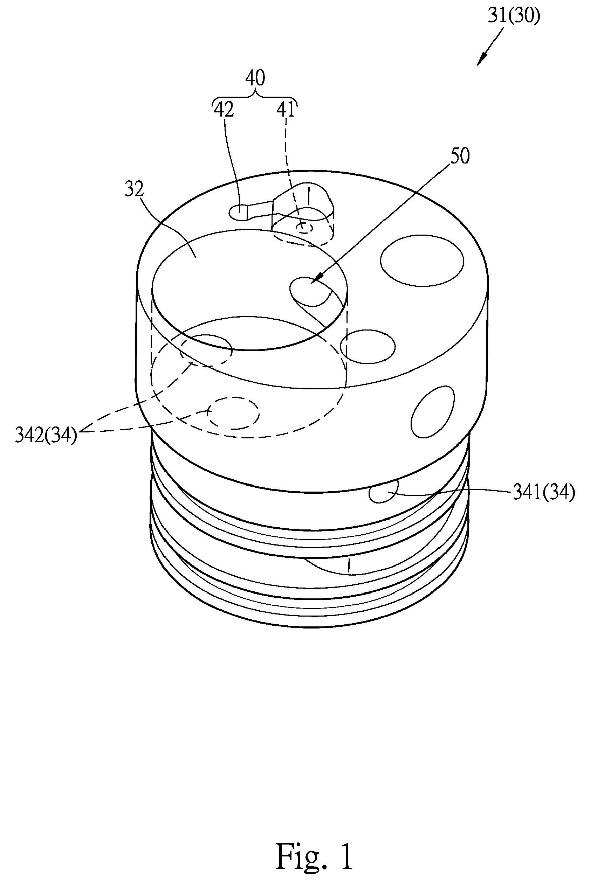

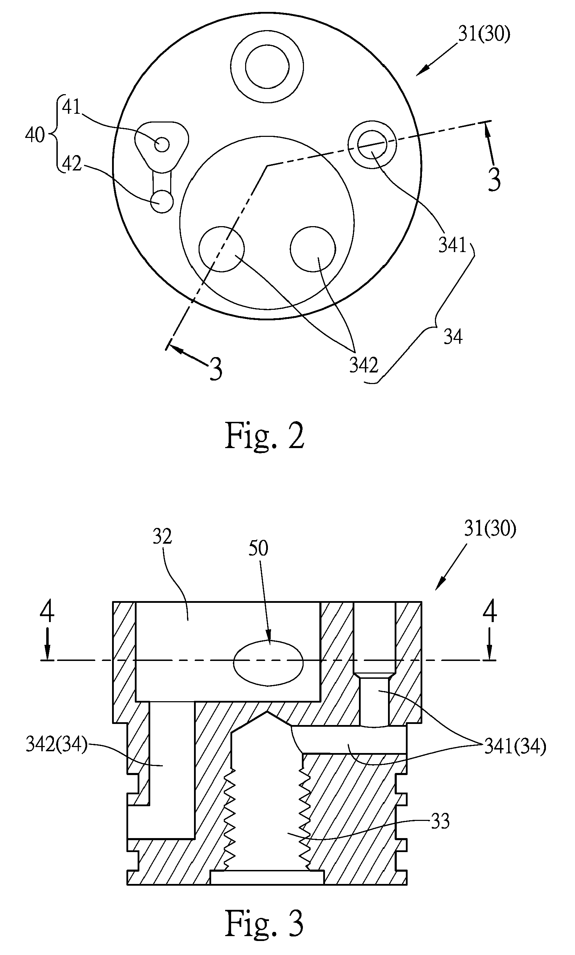

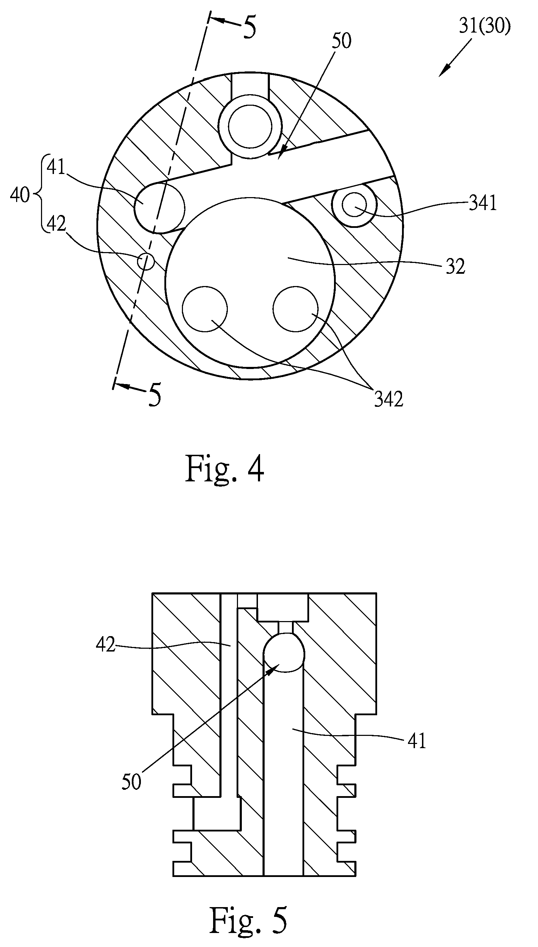

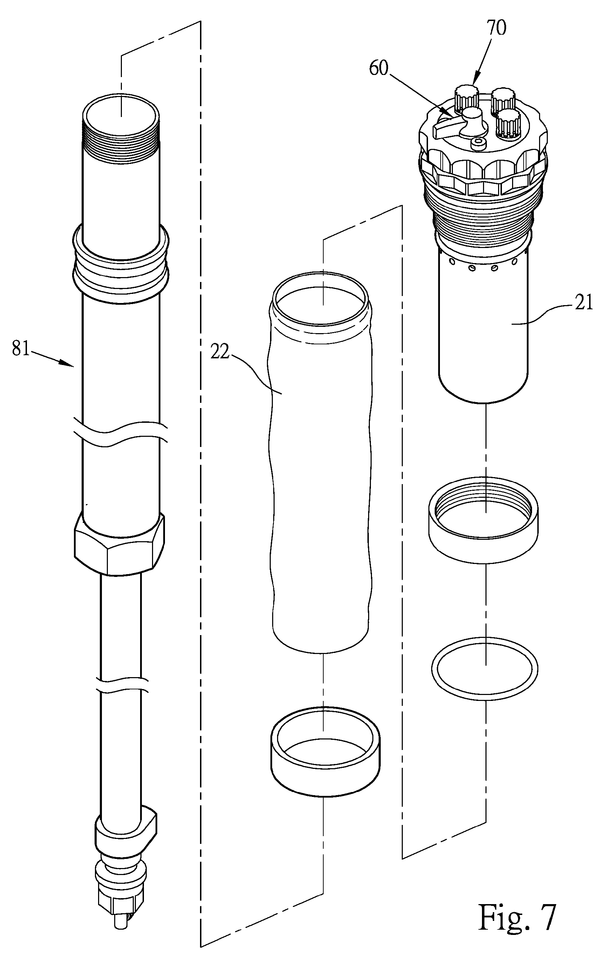

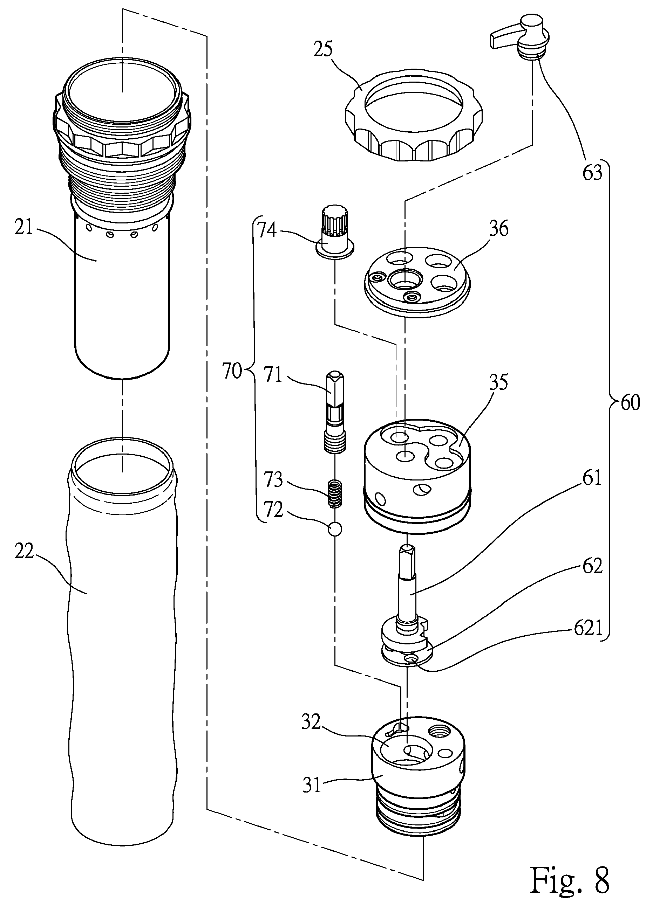

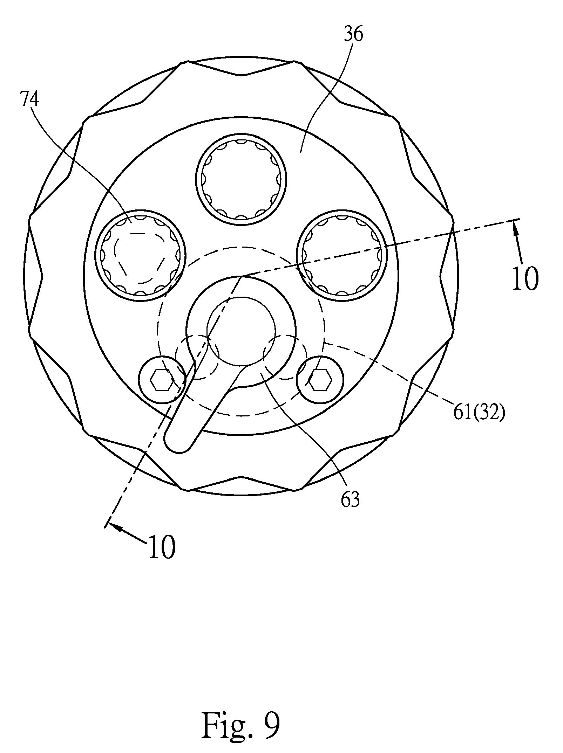

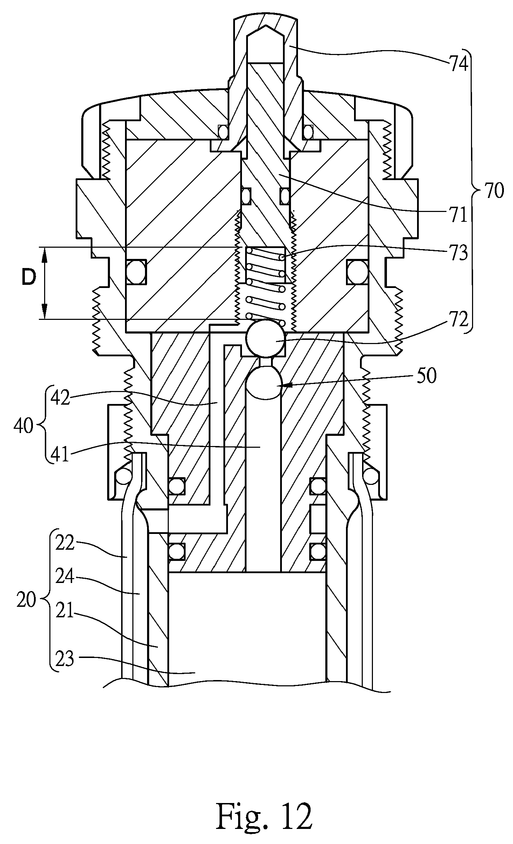

Referring to Figs. 1 to 12, the safety valve and a path split unit for a suspension device of the present invention is used for a bicycle suspension device 81 of a front fork 80, and the suspension device 81 has an inner tube 11 and an outer tube 12 which is movably mounted to the inner tube 11. The suspension device 81 comprises a tube unit 20 which is in the inner tube 11 and has a first part 21 and a second part 22 which is mounted to the first part 21. The first part 21 has a main chamber 23 defined therein, and a sub chamber 24 is defined between the first and second parts 21, 22. The first part 21 is a tubular member, and the second part 22 is a pouch made by elastic material.

A path split unit 30 has a base 31 which has a recess 32 defined in the top thereof, wherein the recess 32 communicates with the sub chamber 24 and a switch unit 60 is received therein. The base 31 further has a main path 33 and a sub-path unit 34, wherein the main path 33 communicates with the main chamber 23, and the sub-path unit 34 communicates with the sub chamber 24. Specifically, the sub-path unit 34 has a first sub-path 341 and a second sub-path 342, the first sub-path 341 is in communication between the main path 33 and the sub chamber 24, the second sub-path 342 is in communication between the recess 32 and the sub chamber 24. The path split unit 30 has a connection part 35 which is located above the base 31 so as to be connected with the switch unit 60 and a safety valve 70.

A safety path unit 40 is located in the base 31 and has one end communicating the sub chamber 24, the other end of the safety path unit 40 communicates with the recess 32 and the sub-path unit 34 by a communication path 50. Specifically, the safety path unit 40 has a first safety path 41 and a second safety path 42, the first safety path 41 is in communication between the communication path 50 and the main chamber 23, and the second safety path 42 is in communication between the communication path 50 and the sub chamber 24.

The switch unit 60 is received in the recess 32 and communicates with the first sub-path 341, the recess 32 and the first and second safety paths 41, 42.

When the switch unit 60 is turned off, the suspension device is locked, the communication between the main path 33 and the sub-path unit 34 is closed. When an impact that is higher than a pre-set value of the suspension device is transferred to the suspension device, a portion of liquid in the main path 33 flows into the sub chamber 24 via the communication path 50 and the safety path unit 40 to provide a level of buffering feature.

The switch unit 60 has a shaft 61 which has one end located in the recess 32 and the other end of the shaft 61 extends beyond the base 31 and the connection part 35. The distal end of the switch unit 60 extends beyond the cover 36. The shaft 61 has a guide path 62 which communicates with the sub chamber 24 to guide liquid in the communication path 50 into the sub chamber 24. When the shaft 61 is rotated an angle, the guide path 62 is closed so that liquid cannot flow between the main chamber 23, the sub chamber 24 and the base 31. The portion of the shaft 61 that is exposed beyond the cover 36 is connected with a switch 63 which rotates the shaft 61 to control the communication of the guide path 62. The guide path 62 has two guide holes 621 defined in the shaft 61, when the shaft 61 is rotated the angle, the guide holes 621 are located corresponding to the two second sub-paths 342, the liquid flows through the two guide holes 621 and the two second sub-paths 342 to provide buffering feature. When the shaft 61 is rotated another angle, the two guide holes 621 are located offset from the two second sub-paths 342, the liquid cannot flow through the two guide holes 621 and the two second sub-paths 342, the suspension device is locked.

The safety path unit 40 has the safety valve 70 received therein so as to adjust pressure of liquid in the safety path unit 40 to break through the pre-set value. A portion of the safety valve 70 extends through the cover 36. The safety valve 70 has an adjustment rod 71 which has one end connected to the base 31, the other end of the adjustment rod 70 extends beyond the base 31. A bead 72 is located in the safety path unit 40 to block the liquid in the safety path unit 40. A resilient member 33 is located between the bead 72 and the adjustment rod 71. A knob 74 is connected to the adjustment rod 71 that exposed beyond the base 31 so as to rotate the adjustment rod 71. The adjustment rod 71 linearly moves in the base 31 to adjust the distance between the adjustment rod 71 and the bead 72, and to adjust the compression of the resilient member 73.

As shown in Figs. 1 to 5, the recess 32, the main path 33, the first and second sub-paths 341, 342, the first and second safety paths 41, 42, and the communication path 50 are integrally formed in the base 31. The first and second sub-paths 341, 342 communicate with each other, the first sub-path 341 communicates with the main path 33. The recess 32 communicating with the second sub-path 342. The first and second safety paths 41, 42 communicate with each other. The first safety path 41 communicates with the communication path 50 which communicates with the first sub-path 341, the recess 32 and the safety path unit 40.

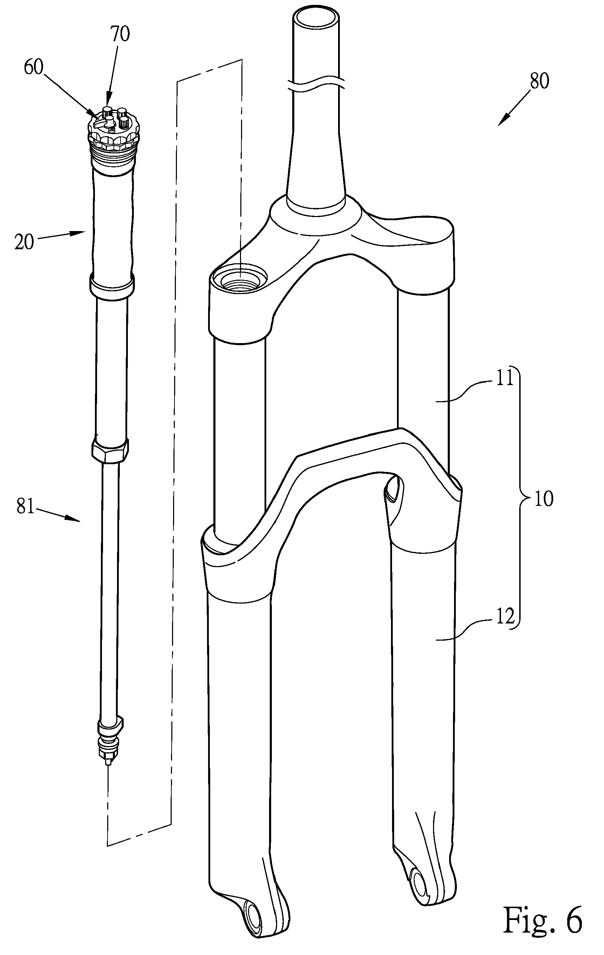

As shown in Figs. 6 to 10, the suspension device 81 of the present invention is installed to a front fork 80 and located in the suspension tube unit 10 having the inner tube 11 and the outer tube 12. The tube unit 20 is connected to the top of the suspension device 81. When assembling, the second part 22 is fixed to the first part 21, and the shaft 61 of the switch unit 60 is installed to the recess 32. The bead 72, the resilient member 73 and the adjustment rod 71 are installed to the first safety path 41. The baes 31, the connection part 35, the shaft 61 and the safety valve 70 are installed in the first part 21. The connection part 35 and the cover 36 are connected to the base 31, wherein the adjustment rod 71 and the shaft 61 partially extend beyond the cover 36. The knob 74 is connected between the connection part 35 and the cover 36 so that a portion of the knob 74 is exposed from the cover 36. The switch 63 is connected to the exposed shaft 61. A positioning ring 25 is used to position the above mentioned parts to the first part 21.

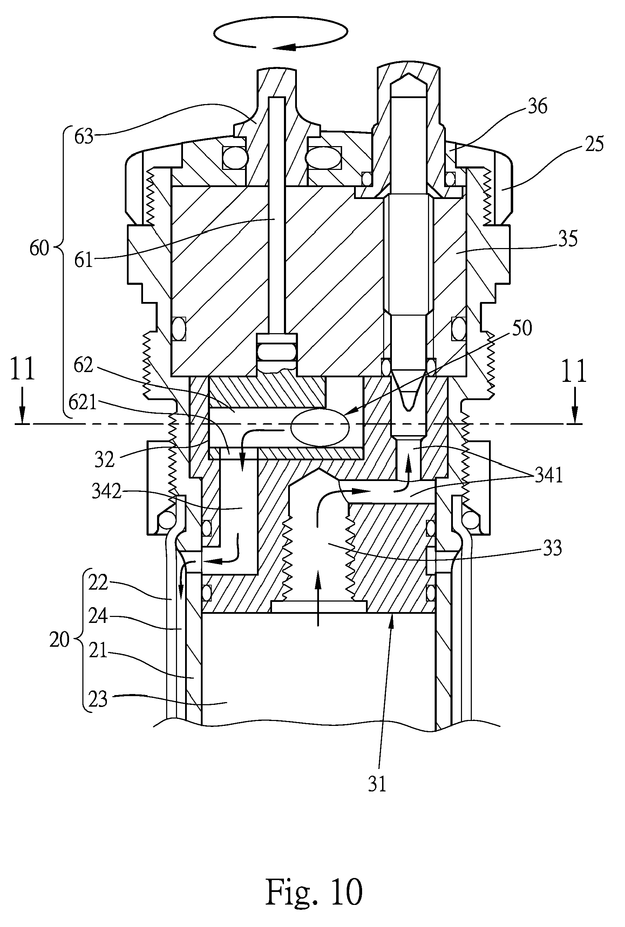

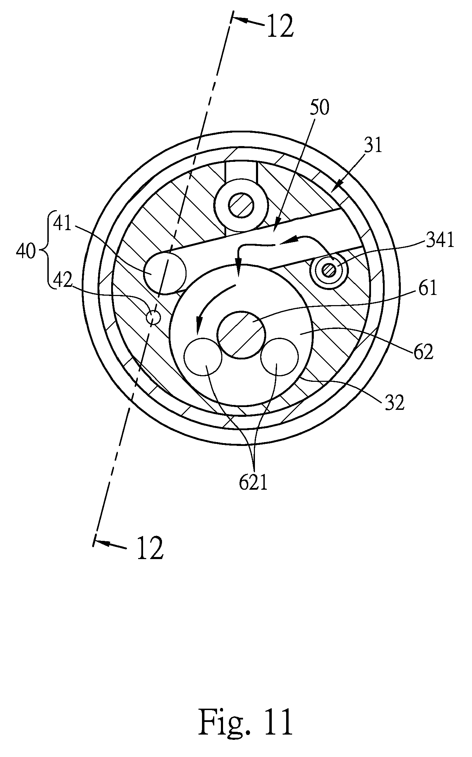

As shown in Figs. 10 and 11, when rotating the switch 63 to ON position, the shaft 61 is simultaneously rotated, and the guide holes 621 are located corresponding to the second sub-paths 342, the liquid in the main chamber 23, the sub chamber 24 and the path split unit 30 can flow freely. When an impact is transferred to the suspension device 81 and the interior volume of the first part 21 is compressed, the liquid flows from the main chamber 23 to the main path 33, and then flows through the first sub-path 341 and the communication path 50. Because the safety valve 70 blocks the first safety path 41, the liquid flows into the recess 32 and passes through the guide path 62 and the guide holes 621, and then enters into the sub chamber 24 via the second sub-path 342 and the first part 21. When the impact releases, the interior volume of the first part 21 returns to its original size, the liquid flows backward from the sub chamber 24, the first part 21, the second sub-paths 342, the guide path 62, the guide holes 621, the communication path 50, the first sub-path 341, the main path 33 and then back to the main chamber 23.

When rotating the switch 63 to "OFF" position, the switch 61 is simultaneously rotated, the guide holes 621 are located offset from the second sub-paths 342, therefore, the liquid in the main chamber 23, the sub chamber 24 and the path split unit 30 cannot flow. The suspension device 81 is under locked status.

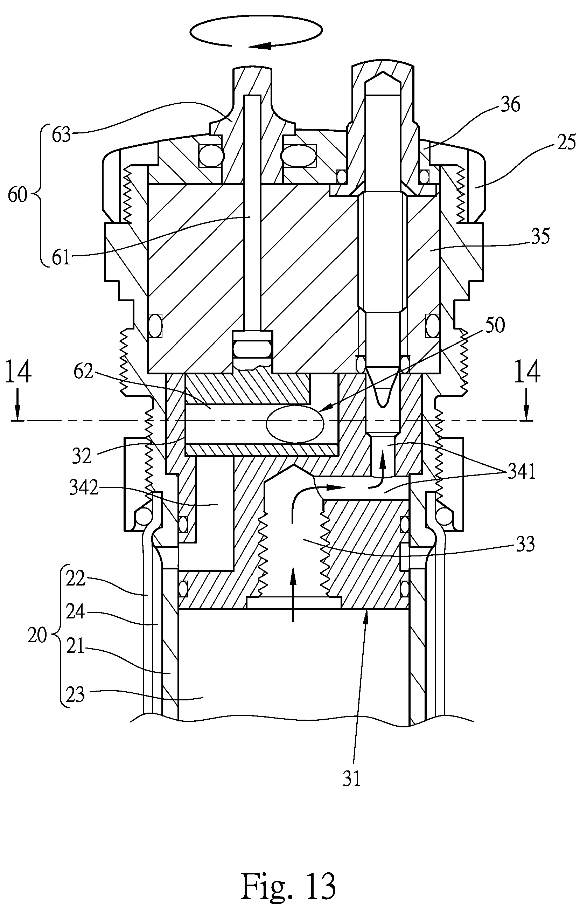

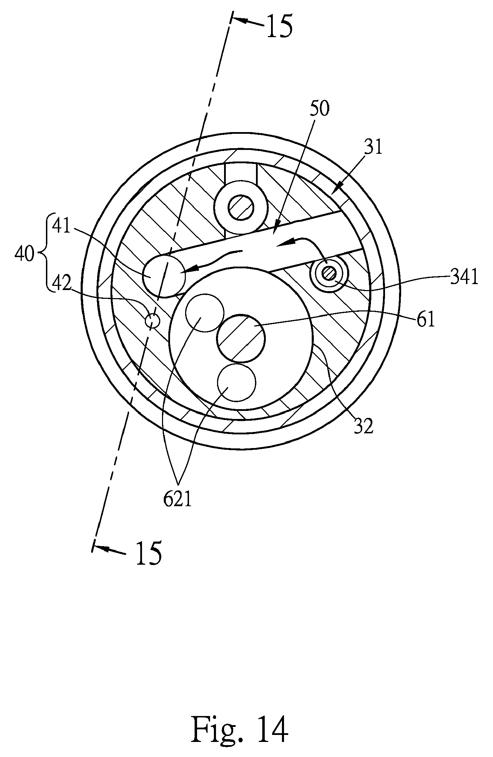

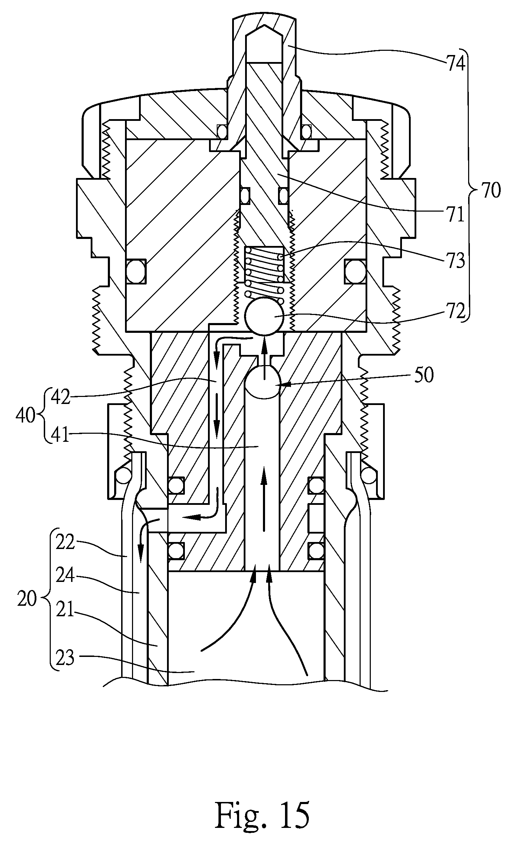

The safety buffering action happens when the switch 63 is operated to the "OFF" position, as shown in Figs. 13 to 15, when a sudden and severe impact happens, the interior volume of the first part 21 is compressed, the liquid still has two paths to flow. The first one is that the liquid flows from the main chamber 23 into the main path 33, the first sub-path 341, the communication path 50, the first safety path 41 and pushes the bead 72 away and then enters to the second safety path 42, and passes through the first part 21 and then enters into the sub chamber 24. The second one is that the fluid flows from the main chamber 23, the first safety path 41 and pushes the bead 72 away and then enters to the second safety path 42, and passes through the first part 21 and then enters into the sub chamber 24.

Even when the switch 63 is switched to "ON" position, when a severe impact happens, the liquid can also follows the above mentioned two paths to push the bead 72 away and then enters into the sub chamber 24. In other words, by increasing paths for the liquid to flow through, a better buffering feature is obtained.

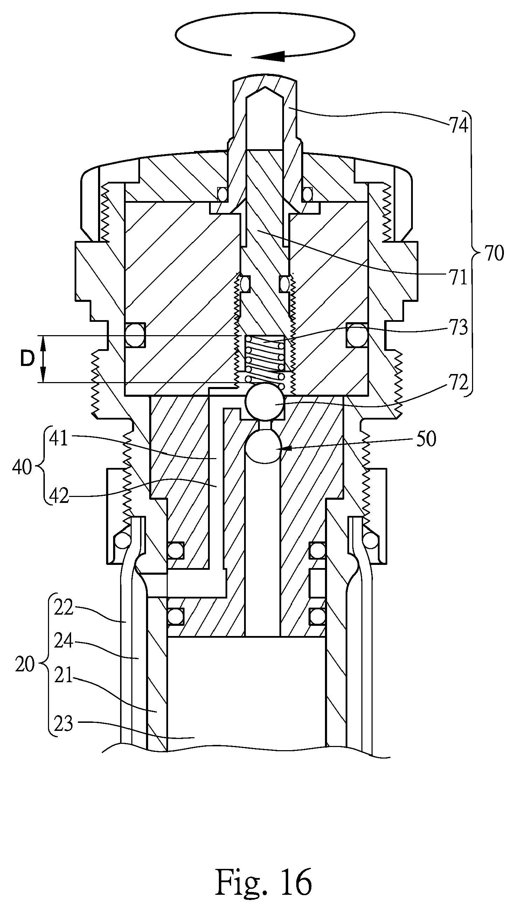

As shown in Fig. 16, when setting the pre-set value of the suspension device 81, the knob 74 is rotated to adjust the compression of the resilient member 73. When the knob 74 is rotated, the adjustment rod 71 is linearly moved simultaneously. When the adjustment rod 71 moves upward to expand the distance "D" for receiving the resilient member 73, the resilient force of the resilient member 73 is easily overcome, such that the liquid pressure from the main chamber 23 can easily push the bead 72 away, so that the safety buffering feature can be activated by a smaller/mild impact. When the adjustment rod 71 moves downward to reduce the distance "D" for receiving the resilient member 73, the resilient force of the resilient member 73 is increased, such that the liquid pressure from the main chamber 23 has to be high enough to push the bead 72 away, so that the safety buffering feature only be activated by a larger/severe impact.

The base 31 properly splits the paths of the liquid and includes the main path 33, the sub-path unit 34 and the safety path unit 40 so that the liquid can be set to flow into the main chamber 23 or the sub chamber 24. The base 31 can arrange the main chamber 23 and the sub chamber 24 to be perpendicular to each other, or to be parallel to each other.

The safety path unit 40 allows the liquid to push the bead 72 away to open the safety path unit 40 when a severe impact is transferred to the suspension device 81, after the severe impact disappears, the bead 72 automatically seals the safety path unit 40 so as to provide a short and temporary safety buffering feature. By the use of the safety path unit 40 and the safety valve 70, the impact does not damage the parts of the suspension device 81.

The operation of the knob 74 of the safety valve 70 can adjust the compression of the resilient member 73, so as to adjust the value that is able to push the bead 72 away. Accordingly, the users may set the value to activate the safety buffering feature.

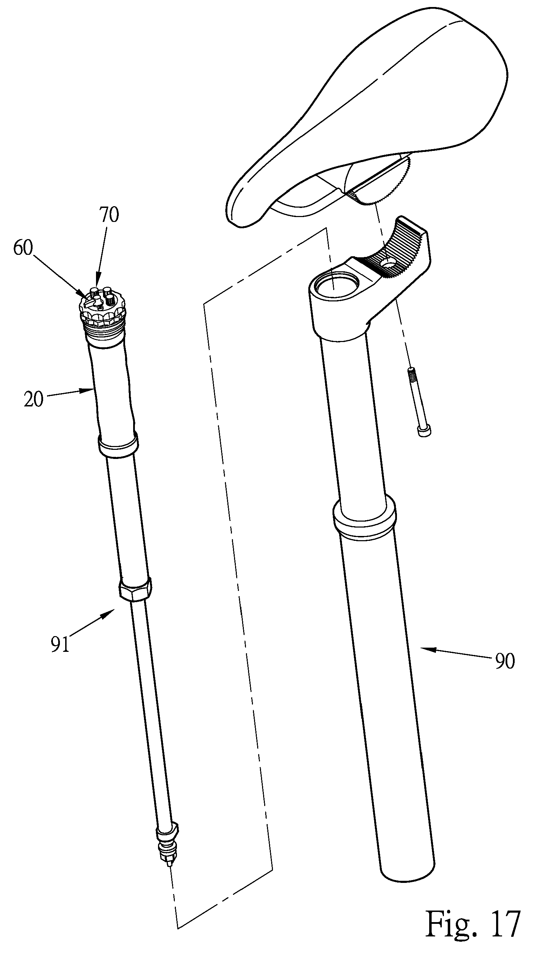

As shown in Fig. 17, the seat suspension device 91 is disclosed to be installed in the suspension tube unit 10 having the inner and outer tubes 11, 12, and is used in the seat tube 90. The tube unit 20 is connected to the top of the seat suspension device 91, and the path split unit 30, the safety path unit 40, the communication path 50, the switch unit 60 and the safety valve 70 are installed to the tube unit 20. The suspension device can also be used on cars, motorbikes or machinery.

While we have shown and described the embodiment in accordance with the present invention, it should be clear to those skilled in the art that further embodiments may be made without departing from the scope of the present invention.

## Claims

1. A path split unit of a suspension device, comprising:
a base;
a recess defined in a top of the base for receiving a switch unit therein;
a main path defined in the base and communicating with a main chamber;
a sub-path unit located in the base and having a first sub path and a second sub-path, the first sub-path being in communication between the main path and a sub chamber, the second sub-path being in communication between the recess and the sub chamber;
a safety path unit located in the base and having a safety path which communicates with the sub chamber, and
a communication path located in the base and communicating with the first sub-path, the recess and the safety path.

2. A safety valve of a suspension device which has an inner tube and an outer tube which is movably mounted to the inner tube, the safety valve comprising:
a tube unit adapted to be located in the inner tube and having a first part and a second part which is mounted to the first part, the first part having a main chamber defined therein, a sub chamber defined between the first and second parts;
a path split unit having a base which has a recess defined in a top thereof, the recess communicating with the sub chamber, the base having a main path and a sub-path unit, the main path communicating with the main chamber, the sub-path unit communicating with the sub chamber, one end of the sub-path unit communicating with the main path;
a safety path unit having one end communicating the sub chamber, the other end of the safety path unit communicating with the recess and the sub-path unit by a communication path, and
a switch unit received in the recess, when the switch unit is turned off, the suspension device is locked, a communication between the main path and the sub-path unit is closed, when an impact that is higher than a pre-set value of the suspension device is transferred to the suspension device, a portion of liquid in the main path flows into the sub chamber via the communication path and the safety path unit to provide a level of buffering feature.

3. The path split unit as claimed in claim 1, wherein the safety path unit has a first safety path and a second safety path, the first safety path is in communication between the communication path and the main chamber, and the second safety path is in communication between the communication path and the sub chamber.

4. The safety valve as claimed in claim 2, wherein the sub-path unit has a first sub-path and a second sub-path, the first sub-path is in communication between the main path and the sub chamber, the second sub-path is in communication between the recess and the sub chamber, the communication path communicates with the first sub-path, the recess and the safety path unit.

5. The path split unit as claimed in claim 2, wherein the safety path unit has a safety valve received therein so as to adjust pressure of liquid in the safety path unit to break through a pre-set value, the path split unit has a connection part which is located above the base so as to receive the switch unit and the safety valve therein.

6. The safety valve as claimed in claim 5, wherein a cover is connected to a top of the connection part, a portion of the switch unit and a portion of the safety valve extending through the cover.

7. The safety valve as claimed in claim 1, wherein the safety path unit has a safety valve received therein so as to adjust pressure of liquid in the safety path unit to break through a pre-set value, the safety valve has an adjustment rod which has one end connected to the base, the other end of the adjustment rod extends beyond the base, a bead located in the safety path unit to block the liquid in the safety path unit, a resilient member is located between the bead and the adjustment rod, a knob is connected to the adjustment rod that exposed beyond the base so as to rotate the adjustment rod, the adjustment rod linearly moves in the base to adjust a distance between the adjustment rod and the bead, and to adjust a compression of the resilient member.

8. The safety valve as claimed in claim 2, wherein the first part is a tubular member, the second part is a pouch made by elastic material.

9. The safety valve as claimed in claim 2, wherein the switch unit has a shaft which has one end located in the recess and the other end of the shaft extends beyond the base, the shaft has a guide path which communicates with the sub chamber to guide liquid in the communication path into the sub chamber, when the shaft is rotated an angle, the guide path is closed so that liquid cannot flow between the main chamber, the sub chamber and the path split unit, the portion of the shaft that is exposed beyond the base is connected with a switch which rotates the shaft to control a communication of the guide path.

10. The safety valve as claimed in claim 9, wherein the sub-path unit has at least one second sub-path which is in communication between the recess and the sub chamber, the guide path has at least one guide hole defined in the shaft, when the shaft is rotated the angle, the at least one guide hole is located corresponding to the at least one second sub-path, the liquid flows through the at least one guide hole and the at least one second sub-path to provide buffering feature, when the shaft is rotated another angle, the at least one guide hole is located offset from the at least one second sub-path, the liquid cannot flow through the at least one guide hole and the at least one second sub-path, the suspension device is locked.

11. The safety valve as claimed in claim 2, wherein the safety path unit has a first safety path and a second safety path, the first safety path is in communication between the communication path and the main chamber, the second safety path is in communication between the communication path 50 and the sub chamber.
